# EUROPÄISCHE PATENTSCHRIFT

(11) **EP 3 332 929 B1**
(45) Veröffentlichungstag und Bekanntmachung des Hinweises auf die Patenterteilung: **24.04.2019**
(21) Anmeldenummer: 17206248.1
(22) Anmeldetag: 08.12.2017
(51) Int. Cl.: B27B 5/06, B27C 9/02, B27M 1/08, B23D 47/04

(54) **VORRICHTUNG ZUR BEARBEITUNG PLATTENFÖRMIGER WERKSTÜCKE MIT EINER GREIFEINRICHTUNG**
DEVICE FOR WORKING PLATE-LIKE WORKPIECES THE DEVICE COMPRISING A WORKPIECE GRIPPING DEVICE
DISPOSITIF DE PRÉHENSION DANS UN DISPOSITIF DE TRAITEMENT DE PIÈCES À USINER EN FORME DE PLAQUE

(30) Priorität: 09.12.2016 DE 102016014683
(43) Veröffentlichungstag der Anmeldung: 13.06.2018
(73) Patentinhaber: IMA Klessmann GmbH Holzbearbeitungssysteme, 32312 Lübbecke (DE)
(72) Erfinder: Herold, Thomas, 31675 Bückeburg (DE); Schürmann, Ralf, 32351 Stemwede (DE); Nackenhorst, Jens, 49419 Wagenfeld (DE)
(74) Vertreter: Schober, Mirko

(56) Entgegenhaltungen:
- EP-A1- 0 455 095
- EP-A1- 2 363 260
- EP-A1- 2 732 942
- EP-A1- 3 012 053
- DE-A1- 3 520 464
- DE-U1-202007 000 011
- DE-U1-202007 002 932

## Beschreibung

Die Erfindung betrifft eine Vorrichtung zur Bearbeitung plattenförmiger Werkstücke mit einer Greifeinrichtung nach dem Oberbegriff des Anspruchs 1.

Bei der Bearbeitung plattenförmiger Werkstücke stellt sich regelmäßig die Frage, wie die zu bearbeitenden plattenförmigen Werkstücke während der Bearbeitung fixiert werden. In der Vergangenheit wurden hierfür verschiedene Methoden entwickelt, um den unterschiedlichen Anforderungen an die Einspannung, die sich bei unterschiedlichen Bearbeitungen ergeben, gerecht zu werden. So werden die plattenförmigen Werkstücke beispielsweise durch einen Unterdruck an ihrer Unterseite fixiert oder flächig zwischen zwei Zugbandförderern eingeklemmt.

Insbesondere bei Bearbeitungen, bei denen großformatige plattenförmige Werkstücke in kleinere plattenförmige Werkstücke aufgeteilt werden, spielen jedoch Greifeinrichtungen, die die plattenförmigen Werkstücke im Bereich ihrer Ränder greifen, eine bedeutende Rolle. Der Vorteil solcher Greifeinrichtungen ist es, dass sie die Platten vergleichsweise sicher fixieren und dabei auch große Reaktionskräfte, wie sie beim Zerteilen der plattenförmigen Werkstücke auftreten, aufnehmen können. Weiterhin führt die Fixierung der plattenförmigen Werkstücke im Randbereich dazu, dass der innere Bereich des plattenförmigen Werkstücks für eine Bearbeitung weitgehend frei zur Verfügung steht, was insbesondere dann von Vorteil ist, wenn das plattenförmige Werkstück mit Sägen und/oder Fräsern in eine Mehrzahl kleinere Werkstücke zerteilt werden soll.

Die Schwierigkeit, die hierbei regelmäßig entsteht, ist, dass nach dem Zerteilen der Werkstücke eine entsprechende Mehrzahl kleinerer Werkstücke immer noch sicher durch die Greifeinrichtung fixiert sein muss. In der Praxis bedeutet dies, dass Greifeinrichtungen der in Rede stehenden Art jeweils eine entsprechend große Anzahl an Greifelementen aufweisen müssen, die an verschiedenen Stellen an das Werkstück angreifen.

Die Greifelemente der in Rede stehenden Art weisen einen ersten Klemmbereich zur Anlage an der ersten Flächenseite des Werkstücks und einen zweiten Klemmbereich zur Anlage an der zweiten, der ersten Flächenseite gegenüberliegenden Flächenseite des Werkstücks auf. Das Werkstück wird zwischen den beiden Klemmbereichen eingeklemmt und erfährt so eine vergleichsweise sichere Fixierung zwischen den Klemmbereichen.

Probleme bei der Bearbeitung können sich nun beispielsweise dann ergeben, wenn Sägen oder Fräswerkzeuge Kräfte an Stellen in das Werkstück einleiten, die von den Greifelementen vergleichsweise weit beabstandet sind. Dann können beispielsweise Schwingungen im Werkstück dazu führen, dass die entsprechend durchgeführten Bearbeitungen, insbesondere die entsprechenden Schnitte, die mit den Säge- oder Fräswerkzeugen durchgeführt werden, unsauber werden. Dies betrifft vor allem Szenarien, bei denen Fräswerkzeuge und/oder Sägen in das Werkstück ein- und/- oder aus dem Werkstück auslaufen. Nach dem Stand der Technik kann dem nur entgegengewirkt werden, indem eine entsprechende Vielzahl Greifelemente vorgesehen wird, um das Werkstück sicher zu fixieren. EP 3 012 053 A1 beschreibt eine Vorrichtung nach dem Oberbegriff des Anspruchs 1.

Der Nachteil hieran ist jedoch, dass die Greifeinrichtungen aufgrund der Vielzahl der benötigten Greifelemente technisch aufwändig und damit auch vergleichsweise teuer werden.

Der Erfindung liegt daher die Aufgabe zugrunde, eine Vorrichtung zum Bearbeiten plattenförmiger Werkstücke aufzuzeigen, die eine für eine qualitativ hochwertige Bearbeitung hinreichende Fixierung der plattenförmigen Werkstücke mit einer konstruktiv einfacheren und damit kostengünstigeren Greifeinrichtung ermöglichen.

Die Aufgabe wird gelöst durch eine Vorrichtung zur Bearbeitung plattenförmiger Werkstücke mit den Merkmalen des unabhängigen Anspruchs 1. Die Merkmale der abhängigen Ansprüche betreffen vorteilhafte Ausführungsformen.

Die erfindungsgemäße Vorrichtung zur Bearbeitung plattenförmiger Werkstücke verfügt über eine erfindungsgemäße Greifeinrichtung. Die Greifeinrichtung weist ein Greifelement zum Greifen des Werkstücks im Bereich einer seiner Schmalseiten auf. Dieses Greifelement verfügt über einen ersten Klemmbereich zur Anlage an der ersten Flächenseite des Werkstücks und einen zweiten Klemmbereich zur Anlage an der zweiten, der ersten Flächenseite gegenüberliegenden Flächenseite des Werkstücks. Der erste und/oder der zweite Klemmbereich weist eine Aussparung auf, die die an dem Werkstück anliegende Fläche des Klemmbereichs an zwei voneinander durch die Aussparung geteilte Teile aufteilt. Die erfindungsgemäße Vorrichtung ist dabei so ausgebildet, dass sie ein spanabhebendes Werkzeug, insbesondere ein Fräswerkzeug, aufweist, welches bei der Durchführung von Schnitten in die Aussparung bewegbar ist.

Hierdurch wird bewirkt, dass ein Werkzeug, wie beispielsweise ein Fräser oder eine Säge, in die Aussparung hinein bewegt werden kann. Die beiden Teile der an dem Werkstück anliegenden Fläche des Klemmbereichs fixieren dann das Werkstück im Bereich seiner Schmalseite so, dass das in die Aussparung bewegte Werkzeug die Schmalseite erreichen und so insbesondere das Werkstück vollständig durchtrennen kann. Die geteilte Fläche des Klemmbereichs fixiert dann mit jedem ihrer Teile eines der durch die Trennung des plattenförmigen Werkstücks mit dem Werkzeug entstandenen Werkstückteile.

Dies ist zum einen deshalb vorteilhaft, weil die Fixierung des Werkstücks in unmittelbarer Nähe des an der Schmalseite endenden Schnittes im Werkstück erfolgt und so das Werkstück in diesem kritischen Bereich besonders gut fixiert ist. Des Weiteren kann ein Greifelement beide durch den Trennschnitt mit dem Werkzeug entstandene Teile des Werkstücks fixieren. Nach dem Stand der Technik wären hierfür zwei herkömmliche Greifelemente notwendig. Folglich lässt sich durch die erfindungsgemäße Greifeinrichtung die Anzahl der benötigten Greifelemente reduzieren und damit eine konstruktiv einfachere und kostengünstigere Greifeinrichtung schaffen.

Vorteilhaft ist es, wenn die Greifeinrichtung eine Mehrzahl Greifelemente zum Greifen des Werkstücks an verschiedenen Stellen derselben Schmalseite des Werkstücks aufweist. Hierbei weisen bevorzugt die Greifelemente jeweils eine erfindungsgemäße Aussparung auf. Dies hat den Vorteil, dass eine Mehrzahl Schnitte in dem Werkstück möglich ist, um das Werkstück in eine entsprechende Mehrzahl Teile zu zerteilen. Bei jedem der Schnitte kann das Werkzeug in die Aussparung eines Greifelements bewegt werden, um die vollständige Durchtrennung des plattenförmigen Werkstücks herbeizuführen. Auf diese Weise lassen sich die Vorteile der vorliegenden Erfindung auch bei komplizierten Schnittplänen im Rahmen der Aufteilung eines plattenförmigen Werkstücks realisieren.

Besonders vorteilhaft ist die Verwendung einer erfindungsgemäßen Greifeinrichtung im Zusammenhang mit der Bearbeitung plattenförmiger Werkstücke aus Holz oder einem Holzersatzwerkstoff. Werkstücke, die Holz oder einen Holzersatzstoff als Werkstoff aufweisen, werden regelmäßig mit Werkzeugen mit hohen Schnittgeschwindigkeiten bzw. großen Zerspanungsleistungen und entsprechend dimensionierten Antrieben bearbeitet. Es versteht sich, dass bei dieser Art der Bearbeitung der vergleichsweise leichten Werkstoffe diese in starkem Maß dazu neigen, während der Bearbeitung in Schwingungen zu geraten. Von daher lassen sich die Vorteile der vorliegenden Erfindung hinsichtlich der sicheren Fixierung, insbesondere bei einer derartigen Verwendung, vorteilhaft ausnutzen.

Vorzugsweise sind die Greifelemente entlang einer ersten Richtung, die bevorzugt parallel zur Schmalseite eines von den Greifelementen im Bereich dieser Schmalseite gegriffenen Werkstücks verläuft, verfahrbar. Hierdurch lassen sich die einzelnen Greifelemente an verschiedenen Positionen der Schmalseite positionieren, beispielsweise um die Realisierung unterschiedlicher Schnittpläne bei der Aufteilung unterschiedlicher plattenförmiger Werkstücke zu ermöglichen.

Nach einer besonderen Ausführungsform ist zumindest eines aus einer Mehrzahl Greifelemente derart gestaltet, dass es, wenn ein von dem Greifelement gehaltenes Werkstück in zwei Teile geteilt wird, wobei der Schnitt des Werkstücks in der Aussparung des Greifelements endet, eines der beiden durch das Greifelement fixierten Teile des ursprünglichen plattenförmigen Werkstücks freigeben kann, während das andere fixiert bleibt. Dies kann beispielsweise dadurch geschehen, dass zwei von der Aussparung getrennte Teile des ersten und/oder zweiten Klemmbereichs unabhängig voneinander bewegbar sind, um ein Greifen und/oder Freigeben des Werkstücks zu ermöglichen.

Diese besondere Ausführungsform ist insbesondere dann sinnvoll, wenn mit einer Mehrzahl Greifelemente ein plattenförmiges Werkstück gehalten und nach einem vorgegebenen Schnittplan in eine Mehrzahl kleinerer plattenförmiger Werkstücke aufgeteilt wird. In einem solchen Fall entsteht häufig ein Verschnittstück, welches aus dem Fertigungsprozess ausgeschleust wird, während die übrigen, durch die Aufteilung des ursprünglichen Werkstücks entstandenen kleineren Werkstücke zur weiteren Verarbeitung weiter gefördert werden. In einem solchen Fall kann das Verschnittstück gezielt freigegeben werden, während die weiteren Werkstücke durch das Greifelement fixiert bleiben.

Die Greifeinrichtung kann in vorteilhafter Weise auch für die Förderung der Werkstücke genutzt werden. Besonders vorteilhaft ist es in diesem Zusammenhang, wenn die Greifeinrichtung dazu ausgebildet ist, eine Vorschubbewegung des Werkstücks zu erzeugen.

Eine Förderung des Werkstücks durch die Greifeinrichtung, insbesondere die Erzeugung einer Vorschubbewegung durch die Greifeinrichtung, hat den Vorteil, dass das Werkzeug und damit insbesondere das gesamte Bearbeitungsaggregat, welches das Werkstück antreibt, diese Bewegung gerade nicht ausführen muss. Regelmäßig sind die zu bearbeitenden plattenförmigen Werkstücke wesentlich leichter als ein derartiges Bearbeitungsaggregat, so dass insgesamt weniger Massen bewegt werden müssen, was wiederum eine konstruktiv einfachere und kostengünstigere Konstruktion der gesamten Vorrichtung ermöglicht.

Ein weiterer Vorteil ist es, dass mit der Greifeinrichtung eine Möglichkeit zur Fixierung und Förderung bzw. Erzeugung der Vorschubbewegung geschaffen wird, welche sich im Hinblick auf unterschiedliche Werkstückgrößen und/oder zu realisierende Schnittpläne bei der Aufteilung des Werkstücks höchst flexibel einsetzen lässt, insbesondere vorteilhaft ist bei der Verwendung im Rahmen einer "Stückzahl 1 Fertigung". Gleichzeitig lässt sich eine solche Vorrichtung jedoch aufgrund der Förderung des Werkstücks durch eine Greifeinrichtung in einen Durchlaufprozess integrieren bzw. es lässt sich eine Vorrichtung gestalten, welche eine Durchlaufbearbeitung der Werkstücke ermöglicht. Hierdurch können - insbesondere im Vergleich zu Bearbeitungsvorrichtungen mit ruhendem Werkstück und bewegtem Aggregat - hohe Durchsätze erzielt werden, d.h. eine große Menge Werkstücke per Zeiteinheit bearbeitet werden.

Die Erfindung wird im Folgenden anhand der Figuren 1 bis 3 schematisch näher erläutert.
Fig. 1 zeigt eine schematische Darstellung eines Greifelements einer erfindungsgemäßen Greifeinrichtung.
Fig. 2 und 3 zeigen eine schematische Darstellung des Aufteilens eines plattenförmigen Werkstücks mit einer erfindungsgemäßen Vorrichtung.

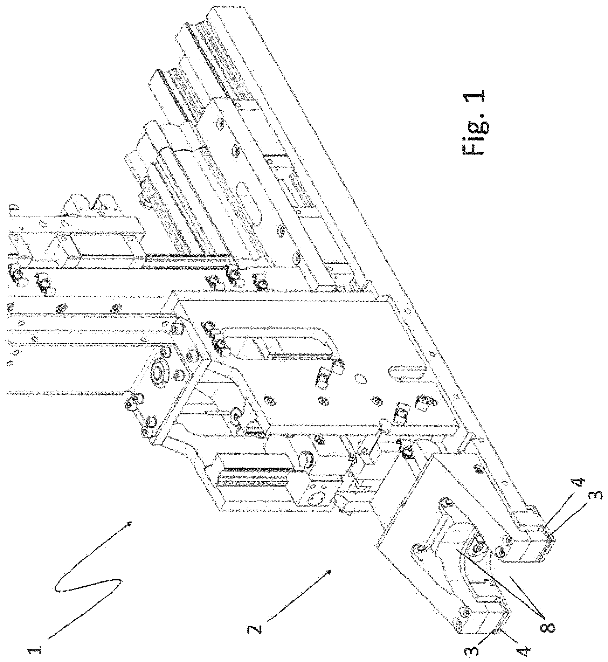

Die erfindungsgemäße Greifeinrichtung 1 ist in der Fig. 1 nur zum Teil dargestellt. Fig. 1 zeigt eine detaillierte Darstellung eines Greifelements 2 einer beispielhaften erfindungsgemäßen Greifeinrichtung 1. Diese kann in vorteilhafter Weise eine Mehrzahl solcher Greifelemente 2 aufweisen.

Das Greifelement 2 weist einen ersten Klemmbereich 3 und einen zweiten Klemmbereich 4 auf. In vorteilhafter Weise weist das beispielhafte erfindungsgemäße Greifelement 2 zudem einen als Anschlagfläche gestalten Anschlag zur Anlage an der Schmalseite 6 des Werkstücks 7 auf, in deren Bereich das Werkstück 7 von der Greifeinrichtung 1 gegriffen wird.

Im gezeigten Ausführungsbeispiel weisen nun in vorteilhafter Weise sowohl der erste Klemmbereich 3 wie auch der zweite Klemmbereich 4 jeweils eine Aussparung 8 auf, welche den jeweiligen Klemmbereich in zwei voneinander durch die Aussparung getrennte Teile aufteilt.

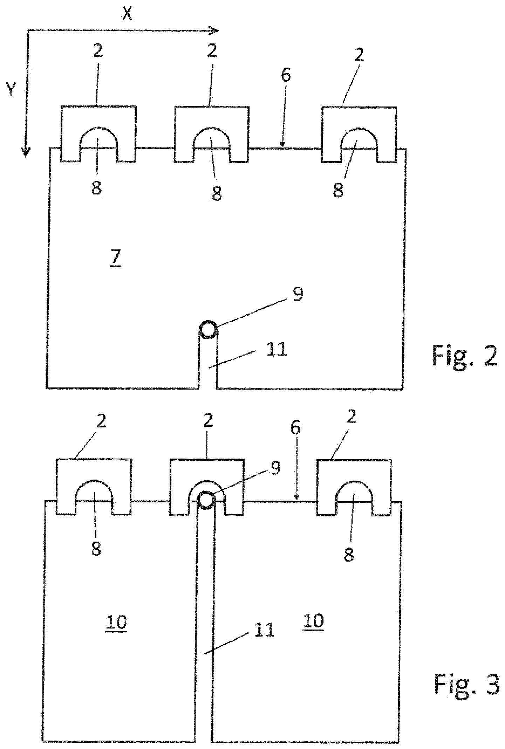

In den Fig. 2 und 3 ist nun schematisch dargestellt, wie ein Werkzeug 9, mit dem das Werkstück 7 in zwei kleinere Werkstücke 10 aufgeteilt wird, beim Aufteilen des Werkstücks 7 in die Aussparung 8 bewegt wird. Von der erfindungsgemäßen Greifeinrichtung 1 sind zur besseren Übersichtlichkeit lediglich die Greifelemente 2 in den Fig. 2 und 3 dargestellt. Diese sind bevorzugt so an der Greifeinrichtung 1 aufgenommen, dass sie entlang der ersten Richtung X verfahren und/oder positioniert werden können. Die erste Richtung X ist hierbei in vorteilhafter Weise parallel zu der Schmalseite 6 des Werkstücks 7 orientiert, in deren Bereich das Werkstück 7 von den Greifelementen 2 der Greifeinrichtung 1 gegriffen wird.

Die beispielhafte Greifeinrichtung 1 kann in vorteilhafter Weise als Vorschubeinrichtung genutzt werden, um das Werkstück 7 in der Vorschubrichtung Y zu bewegen. Die Vorschubrichtung Y ist hierbei bevorzugt rechtwinklig zu ersten Richtung X orientiert. In vorteilhafter Weise weist die Schmalseite 6, in deren Bereich das Werkstück 7 gegriffen wird, entgegen der Vorschubrichtung Y.

Der mit dem Werkzeug 9 erzeugte Schnitt 11 endet im gezeigten Beispiel an der Schmalseite 6, in deren Bereich das Werkstück 7 gegriffen und somit fixiert wird. Die Lage des Schnittes 11 hängt davon ab, welcher Schnittplan bei der Aufteilung des Werkstücks 7 in die kleineren Werkstücke 10 realisiert werden soll. Soll sich der Schnitt 11 an einer anderen Position befinden, so würde das im gezeigten Beispiel in vorteilhafter Weise dadurch realisierbar sein, dass das Greifelement 2, in dessen Aussparung 8 das Werkzeug 9 bei der Durchführung des Schnittes 11 bewegt wird, an einer anderen Position entlang der ersten Richtung X positioniert wird, um an dieser Position im Bereich der Schmalseite 6 am Werkstück 7 anzugreifen.

Wie insbesondere in Fig. 3 deutlich wird, fixieren die Klemmbereiche des Greifelements 2, in dessen Aussparung 8 das Werkzeug 9 bewegt wird, unterschiedliche kleinere Werkstücke 10 beidseits des Schnittes 11 an. Auf diese Weise werden die beiden kleineren Werkstücke 10 in unmittelbarer Nähe des Austritts des Werkzeugs 9 aus der Schmalseite 6 fixiert, so dass gerade in diesem kritischen Bereich eine sichere Fixierung des Werkstücks 7 bzw. der resultierenden kleineren Werkstücke 10 bis zum vollständigen Abschluss der Aufteilung des Werkstücks 7 gewährleistet ist.

### Beugszeichenliste:

- 1: Greifeinrichtung
- 2: Greifelement
- 3: erster Klemmbereich
- 4: zweiter Klemmbereich
- 6: Schmalseite
- 7: Werkstück
- 8: Aussparung
- 9: Werkzeug
- 10: kleinere Werkstücke
- 11: Schnitt
- X: erste Richtung
- Y: Vorschubrichtung

## Patentansprüche

1. Vorrichtung zur Bearbeitung plattenförmiger Werkstücke (7), insbesondere Werkstücke (7), die Holz oder einen Holzersatzwerkstoff als Werkstoff aufweisen, mit einer Greifeinrichtung (1), welche ein Greifelement (2) zum Greifen des Werkstücks (7) im Bereich einer seiner Schmalseiten (6) aufweist, wobei das Greifelement (2) einen ersten Klemmbereich (3) zur Anlage an der ersten Flächenseite des Werkstücks (7) und einen zweiten Klemmbereich (4) zur Anlage an der zweiten, der ersten Flächenseite gegenüberliegenden Flächenseite des Werkstücks (7) aufweist, wobei der erste Klemmbereich (3) und/oder der zweite Klemmbereich (4) eine Aussparung (8) aufweist, die die an dem Werkstück (7) anliegende Fläche des Klemmbereichs (3, 4) in zwei voneinander durch die Aussparung (8) getrennte Teile aufteilt,
**dadurch gekennzeichnet,**
**dass** die Vorrichtung ein spanabhebendes Werkzeug (9), insbesondere ein Fräswerkzeug, aufweist, welches bei der Durchführung von Schnitten (11) in die Aussparung (8) bewegbar ist.

2. Vorrichtung nach Anspruch 1,
**dadurch gekennzeichnet,**
**dass** die Greifeinrichtung (1) eine Mehrzahl Greifelemente (2) zum Greifen des Werkstücks (7) an verschiedenen Stellen im Bereich derselben Schmalseite (6) des Werkstücks (7) aufweist.

3. Vorrichtung nach Anspruch 1 oder 2,
**dadurch gekennzeichnet,**
**dass** die Greifelemente (2) entlang einer ersten Richtung (X), die bevorzugt parallel zu der Schmalseite (6) des Werkstücks (7), in deren Bereich das Werkstück (7) durch die Greifelemente (2) gegriffen ist, verläuft, verfahrbar sind.

4. Vorrichtung nach einem der vorigen Ansprüche,
**dadurch gekennzeichnet,**
**dass** zumindest eines der Mehrzahl der Greifelemente (2), insbesondere ein äußeres der Mehrzahl Greifelemente (2), derart gestaltet ist, dass es einen von zwei durch die beiden von der Aussparung (8) getrennten Teile des ersten Klemmbereichs (3) und/oder zweiten Klemmbereichs (4) gehaltenen Bereichen des Werkstücks (7) unabhängig von dem anderen Klemmbereich (3, 4) freigeben kann, insbesondere wobei die von der Aussparung (8) getrennten Teile des ersten Klemmbereichs (3) und/oder zweiten Klemmbereichs (4) zum Greifen und/oder Freigeben des Werkstücks (7) unabhängig voneinander bewegbar sind.

5. Vorrichtung nach Anspruch 1,
**dadurch gekennzeichnet,**
**dass** die Vorrichtung, insbesondere die Greifeinrichtung (1) und das Werkzeug (9), derart gestaltet ist, dass es möglich ist, durch die Bewegung des Werkzeugs (9) in die Aussparung (8) die Flächenseite (6) des Werkstücks (7) im Bereich der Aussparung (8) mit dem Werkzeug (9) zu durchtrennen.

6. Vorrichtung nach einem der Ansprüche 1 oder 5,
**dadurch gekennzeichnet,**
**dass** die Vorrichtung, insbesondere die Greifeinrichtung (1), dazu ausgebildet ist, das Werkstück (7) zu fördern, insbesondere eine Vorschubbewegung des Werkstücks (7) zu erzeugen.

7. Verwendung einer Vorrichtung nach einem der Ansprüche 1 bis 6 zum Bearbeiten eines plattenförmigen Werkstücks (7), das Holz oder einen Holzersatzwerkstoff als Werkstoff aufweist, wobei das plattenförmige Werkstück (7) durch die Greifeinrichtung (1) der Vorrichtung fixiert wird, insbesondere wobei das plattenförmige Werkstück (7) durch die Greifeinrichtung (1) im Bereich einer seiner Schmalseiten (6) fixiert wird.

## Claims

1. Device for working plate-like workpieces (7), more particularly workpieces (7) which comprise wood or a wood substitute as the material, with a gripping device (1) which comprises a gripping element (2) for gripping the workpiece (7) in the region of one of its narrow sides (6), wherein the gripping element (2) has a first clamping region (3) for bearing against the first flat side of the workpiece (7) and a second clamping region (4) for bearing against the second flat side of the workpiece (7) opposite the first flat side, wherein the first clamping region (3) and/or the second clamping region (4) has/have a recess (8) which divides the surface of the clamping region (3,4) bearing against the workpiece (7) into two parts separated from one another by the recess (8) **characterised in that** the device has a stock-removing tool (9), more particularly a milling tool, which when carrying out cuts (11) can be moved into the recess (8).

2. Device according to claim 1, **characterised in that** the gripping device (1) has a plurality of gripping elements (2) for gripping the workpiece (7) at various places in the region of the same narrow side (6) of the workpiece (7).

3. Device according to claim 1 or 2 **characterised in that** the gripping elements (2) are movable along a first direction (X) which preferably runs parallel to the narrow side (6) of the workpiece (7) in the region of which the workpiece (7) is gripped by the gripping elements (2).

4. Device according to one of the preceding claims **characterised in that** at least one of the plurality of the gripping elements (2), more particularly an outer one of the plurality of gripping elements (2) is configured in such away that it can release one of two regions of the workpiece (7) held by the two parts of the first clamping region (3) and/or second clamping region (4) separated by the recess (8), independently of the other clamping region (3,4), more particularly wherein the parts of the first clamping region (3) and/or second clamping region (4) separated by the recess (8) are movable independently of one another for gripping and/or releasing the workpiece (7).

5. Device according to claim 1 **characterised in that** the device, more particularly the gripping device (1) and the tool (9), is configured so that it is possible by moving the tool (9) into the recess (8) the flat side (6) of the workpiece (7) is to be separated in the region of the recess (8) by the tool (9).

6. Device according to one of claims 1 or 5 **characterised in that** the device, more particularly the gripping device (1) is designed to move on the workpiece (7), more particularly to generate a forward movement of the workpiece (7).

7. Use of a device according to one of claims 1 to 6 for processing a plate-type workpiece (7) which comprises wood or wood substitute as the material, wherein the plate-like workpiece (7) is fixed by the gripping device (1) of the device, more particularly wherein the plate-like workpiece (7) is fixed by the gripping device (1) in the region of one of its narrow sides (6).

## Revendications

1. Dispositif de traitement de pièces à usiner en forme de plaques (7), en particulier de pièces à usiner (7) qui présentent en tant que matériau du bois ou un matériau de remplacement du bois, avec une installation de préhension (1), qui présente un élément de préhension (2) destiné à saisir les pièces à usiner (7) dans le secteur de l'un de leurs côtes étroits (6), sachant que l'élément de préhension (2) présente une première zone de serrage (3), qui est destinée à porter contre la première face de la pièce à usiner (7), et une deuxième zone de serrage (4), qui est destinée à porter contre la deuxième face de la pièce à usiner (7) opposée à la première face, sachant que la première zone de serrage (3) et / ou la deuxième zone de serrage (4) présente un évidement (8), qui divise la surface de la zone de serrage (3, 4), qui portant contre la pièce à usiner (7), en deux parties, qui sont séparées l'une de l'autre par l'évidement (8),
**caractérisé en ce que**
le dispositif présente un outil à enlèvement de copeaux (9), en particulier un outil de fraisage, qui, lors de l'exécution de découpes (11), peut être déplacé dans l'évidement (8).

2. Dispositif selon la revendication 1,
**caractérisé en ce que**
l'installation de préhension (1) présente une pluralité d'éléments de préhension (2), qui sont destinés à saisir la pièce à usiner (7) à différents endroits, dans la section du même côté étroit (6) de la pièce à usiner (7).

3. Dispositif selon revendication 1 ou 2,
**caractérisé en ce que**
les éléments de préhension (2) peuvent être déplacés longitudinalement dans une première direction (X), qui, de préférence, s'étend parallèlement au côté étroit (6) de la pièce à usiner (7), dans la section duquel la pièce à usiner (7) est saisie par les éléments de préhension (2).

4. Dispositif selon l'une des revendications précédentes,
**caractérisé en ce que**,
des plusieurs éléments de préhension (2), au moins l'un, en particulier l'un des éléments de préhension (2) situé vers l'extérieur, est conçu de manière à ce qu'il puisse libérer l'un de deux sections de la pièce à usiner (7) maintenues par les deux parties de la première zone de serrage (3) et / ou de la deuxième zone de serrage (4), séparées par l'évidement (8), indépendamment de l'autre zone de serrage (3, 4), sachant en particulier que les parties de la première zone de serrage (3) et / ou de la deuxième zone de serrage (4) séparées par l'évidement (8) peuvent être déplacées indépendamment l'une de l'autre pour saisir et / ou libérer la pièce à usiner (7).

5. Dispositif selon la revendication 1,
**caractérisé en ce que**
le dispositif, en particulier l'installation de préhension (1) et l'outil (9), sont conçus de manière à ce qu'il soit possible, grâce au mouvement de l'outil à enlèvement de copeaux (9) dans l'évidement (8), de sectionner la face (6) de la pièce à usiner (7), dans la section de l'évidement (8), au moyen de l'outil (9).

6. Dispositif selon l'une des revendications 1 à 5,
**caractérise en ce que**
le dispositif, en particulier l'installation de préhension (1), est conçu pour convoyer la pièce à usiner (7), en particulier pour générer un mouvement d'avance de la pièce à usiner (7).

7. Utilisation d'un dispositif selon l'une des revendications 1 à 6 pour le traitement d'une pièce à usiner (7) en forme de plaque, qui présente, en tant que matériau, le bois ou un matériau de emplacement du bois, sachant que la pièce à usiner (7) en forme de plaque est fixée par l'installation de préhension (1) du dispositif, sachant en particulier que la pièce à usiner (7) en forme de plaque est fixée par l'installation de préhension (1) dans une section de l'un de ses côtés étroits (6).
